# EUROPÄISCHE PATENTSCHRIFT

(11) **EP 3 435 270 B1**
(45) Veröffentlichungstag und Bekanntmachung des Hinweises auf die Patenterteilung: **23.09.2020**
(21) Anmeldenummer: 17183586.1
(22) Anmeldetag: 27.07.2017
(51) Int. Cl.: G06F 21/53, G06F 21/64

(54) **VORRICHTUNG UND VERFAHREN ZUM KRYPTOGRAPHISCH GESCHÜTZTEN BETRIEB EINER VIRTUELLEN MASCHINE**
DEVICE AND METHOD FOR CRYPTOGRAPHICALLY PROTECTED OPERATION OF A VIRTUAL MACHINE
DISPOSITIF ET PROCÉDÉ DE FONCTIONNEMENT PROTÉGÉ PAR CRYPTOGRAPHIE D'UNE MACHINE VIRTUELLE

(43) Veröffentlichungstag der Anmeldung: 30.01.2019
(73) Patentinhaber: Siemens Aktiengesellschaft, 80333 München (DE)
(72) Erfinder: Falk, Rainer, 85586 Poing (DE)

(56) Entgegenhaltungen:
- WO-A1-2016/168487
- US-A1- 2012 159 184
- US-A1- 2016 275 461

## Beschreibung

Die Erfindung bezieht auf eine Vorrichtung und Verfahren zum Betrieb einer kryptographisch geschützten virtuellen Maschine sowie ein dazugehöriges Computerprogramm(-produkt).

### Hintergrund

Hardware- und Softwarekomponenten können Fehlfunktion aufweisen oder absichtlich manipuliert sein. Dabei sollten kritische Funktionen verlässlich implementiert sein, auch wenn die verwendete Plattform eventuell nicht vertrauenswürdig ist.

Ein Computersystem kann allgemein als Automat bzw. Maschine beschrieben werden, die Transitionen durchführt. Eine Transition kann dabei als Zustandsübergang von Speichern und Registern durch die Ausführung eines Befehls bzw. einer Befehlsfolge verstanden werden. Die Ausführung einer Folge von Anweisungen bzw. Befehlen, auch Programmcode genannt, führt zu einer Folge von Transitionen. Ein Beispiel ist eine TuringMaschine, eine Registermaschine oder eine maschinenprogrammierbare CPU. Solche Computer können nicht nur in Hardware realisiert sein, sondern sie können in Software implementiert werden (Emulation). Insbesondere kann eine virtuelle Maschine durch ein Interpreter-Programm realisiert sein, das die Anweisungen (Programmcode) ausführt. Dies ist z.B. von einer Java Virtual Machine oder einer Microsoft Common Language Runtime virtuellen Maschine bekannt.

In US 2016/275461 A1 wird beschrieben, dass eine Integritätsinformation eines Gerätes in der Blockchain hinterlegt wird. Eine von diesem Gerät ausgehende Transaktion ist nur gültig, wenn die Geräteintegritätsinformation gültig ist. Die beschriebene TEE bzw. mögliche virtuelle Maschine wird für den kryptographischen Schutz der Kommunikationsverbindung des Geräts mit einem Service Provider eingesetzt.

Im Bereich der Safety (funktionale Sicherheit) ist ein "Coded Processing" bekannt, das in Martin Süßkraut, Jörg Kaienburg: Safety-Critical Smart Systems with Software Coded Processing, Conference on Smart Systems Integration, Copenhagen, 2015, vorgestellt wird (siehe https://www.researchgate.net/publication/273351261_Safety-Critical_Smart_Systems_with_Software_Coded_Processing).

Dabei werden Berechnungen auf einer Hardware-Plattform wiederholt mit unterschiedlich codierten Daten durchgeführt. Dadurch können Safety-kritische Systeme auf einem einzelnen Rechensystem realisiert werden, wobei z.B. Defekte der Hardware offenbart werden. Somit wird der Hardware-Realisierungsaufwand für mehrkanalige Rechner vermieden. Die von "Coded Processing" bekannten Verfahren schützen jedoch nur vor zufälligen Fehlern, nicht vor absichtlichen Manipulationen.

Um transiente Fehler zu erkennen, ist eine Code-Replizierung möglich, bei dem ein Code mehrfach ausgeführt wird.

Eine Aufgabe der vorliegenden Erfindung ist es, Verfahren und Vorrichtungen bereitzustellen, welche eine Alternative bzw. eine Verbesserung zu den bekannten Verfahren bieten.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht eine Vorrichtung, insbesondere geeignet für eine Laufzeitumgebung für eine Blockkette, zum Betrieb einer kryptographisch geschützten virtuellen Maschine aufweisend:
- Mittel zum Bereitstellen zumindest eines ersten Gliedes einer Blockkette, welches mindestens einen Transaktionsdatensatz umfasst, der zumindest einen ersten Betriebszustand der virtuellen Maschine beschreibt und zumindest eine Anweisung zur Bildung eines zweiten Glieds in der Blockkette aufweist, wobei der mindestens eine Transaktionsdatensatz des zweiten Glieds, einen gegenüber den ersten Betriebszustand geänderten zweiten Betriebszustand der virtuellen Maschine beschreibt,
- Mittel zum Bereitstellen einer Überprüfungsfunktion, welche eine durch den mindestens einen Transaktionsdatensatz definierte, auszuführende Transaktion dahingehend überprüft, ob der zweite Betriebszustand der virtuellen Maschine zulässig ist, und
- Mittel zum Ausführen der Transaktion abhängig von der überprüften Zulässigkeit.

Die Überprüfungsfunktion kann insbesondere eine Interpretationsfunktion für den Programmcode der virtuellen Maschine sein. Die Überprüfungsfunktion (d.h. Interpreter-Code für die VM, d.h. die Interpretationsfunktion) kann in die Blockketten-Plattform oder alternativ speziell in die erste Blockketten-Transaktion eingestellt werden, die den Initialzustand er Virtuellen Maschine definiert (d.h. die Virtuelle Maschine instanziiert).

Die Überprüfungsfunktion kann im ersten Glied in der Blocckette integriert sein, insbesondere in dem ersten Transaktionsdatensatz. Das bedeutet, dass der erste Transaktionsdatensatz neben dem ersten Betriebszustand der virtuellen Maschine auch eine Überprüfungsfunktion bzw. Interpretationsfunktion zur Ausführung des Programmcodes der virtuellen Maschine, d.h. zumindest einer Anweisung zur Bildung eines zweiten Glieds in der Blockkette, aufweist. Dieses erste Glied der Blockkette kann ein beliebiges Block-Glied einer Blockkette sein. Insbesondere kann es ein Genesisblock-Glied oder eines der darauffolgenden (Block-)Glieder sein.

Die Überprüfungsfunktion/Interpretationsfunktion kann jedoch auch außerhalb einer Blockkette in einer Laufzeitumgebung zum Ausführen der Transaktion angeordnet sein. Diese Überprüfungsfunktion führt in der Regel eine Integritätsüberprüfung durch. In der Informationssicherheit bedeutet Integrität von Korrektheit, Vollständigkeit und nicht manipulierte Daten. Davon abhängig kann ein Betriebszustand der virtuellen Maschine zulässig bzw. gültig sein. Zudem kann die Überprüfungsfunktion Aufgaben eines Interpreters übernehmen, der Befehle zum Betrieb der virtuellen Maschine interpretiert und/oder ausführt. Mit der Ausführung einer Transaktion wird ein Betriebszustandsübergang von einem ersten in einen zweiten Betriebszustand der virtuellen Maschine herbeigeführt.

Die Überprüfungsfunktion kann durch einen sogenannten Smart Contract einer Blockkette repräsentiert sein. Dies ist eine von mehreren Möglichkeiten, eine kryptographisch geschützte virtuelle Maschine zu realisieren.

Die Betriebszustandsänderung kann Maschinen-interne Zustände oder Zustände von außerhalb der Maschine angeordneten Sensoren, Aktoren und/oder Steuerungseinrichtungen für Geräte oder Anlagen betreffen.

Ein weiterer Aspekt der Erfindung ist ein Transaktionsdatensatz für ein Glied, das ein erstes Glied sein kann, einer Blockkette, welcher zumindest einen ersten Betriebszustand einer virtuellen Maschine beschreibt, aufweisend:
- zumindest eine Anweisung zur Bildung zumindest eines weiteren (zweiten) Glieds in der Blockkette, wobei der Transaktionsdatensatz des weiteren Glieds, einen gegenüber den ersten Betriebszustand geänderten zweiten Betriebszustand der virtuellen Maschine beschreibt, und
- eine Überprüfungsfunktion, welche eine durch den Transaktionsdatensatz definierte, auszuführende Transaktion dahingehend überprüft, ob der zweite Betriebszustand der virtuellen Maschine zulässig ist.

Der Transaktionsdatensatz ist mittels einer Laufzeitumgebung als Transaktion ausführbar.

Die Technologie von Blockketten (engl. Blockchains bzw. Block Chains) bzw. "Distributed Ledgers" ist aktuell ein intensiv diskutierte Technologie.

Unter einer Blockkette bzw. Blockchain wird im allgemeinen eine Datenbank verstanden, deren Integrität (Sicherung gegen nachträgliche Manipulation) durch Speicherung des Einwegfunktionswertes , auch Hashwert genannt, des vorangehenden Datensatzes bzw. Blocks bzw. Glieds im jeweils nachfolgenden, also durch kryptographische Verkettung, gesichert ist. Der Schutz entsteht durch eine Mehrheit von vertrauenswürdigen Knoten in einem Blockchain-Netzwerk, welche ein sogenanntes Mining oder Validieren von Blöcken durchführt. Im Netz der an einer Blockchain teilnehmenden Knoten wird in regelmäßigen Abständen, beispielsweise alle 10 Minuten, ein neuer Block gebildet und dabei der Hashwert eines bestehenden Blockes mit hinterlegt. Einmal in der Kette auftauchende Transaktionen sind nicht mehr unbemerkt veränderbar. Bei diesem Mining-Prozess wird die Gültigkeit von im Block zu hinterlegenden Transaktionen geprüft. Neben einem Mining-Prozess als "Proof of Work" sind auch Alternativen bekannt, insbesondere ein "Proof of Stake", bei dem ein Block durch einen pseudozufällig, aber deterministisch ausgewählten Blockketten-Knoten bestätigt wird, oder eine zugangskontrollierte Blockkette (permissioned Blockchain).

Bekannte Blockchain-Systeme sind Bitcoin und Ethereum. Während Bitcoin ursprünglich für Kryptowährungstransfers geschaffen wurde, baut Ethereum auf das Einbinden von sogenannten Smart Contracts auf. Die in einem Smart Contract vereinbarten Bedingungen werden durch die Blockchain gesichert und der Vertrag selbst wird über das Netz abgewickelt. Das Umsetzen der Vertragsbedingungen wird über dazugehörige durchgeführte Transaktionen kontrolliert: In einem programmierten Smart Contract vorgesehene Folgeaktionen können je nach erfolgter Transaktion durchgeführt werden. Es sind weitere Blockketten-Realisierungen z.B. Hyperledger möglich.

Blockchain geschützter Transaktionsdatensatz umfasst im allgemeinen Programmcode. Unter dem Begriff "Smart Contract" wird ein Programmcode verstanden, in dem zum Erstellungszeitpunkt Bedingungen definiert und zu seiner Laufzeit ausgewertet werden können, so dass bestimmte Transaktionen in einer bestimmten (Geldbetrags-)Höhe an einen bestimmten oder mehrere bestimmte Empfänger durchgeführt werden können oder nicht.

Mit Hilfe des Transaktionsdatensatzes kann die Transaktion ausgeführt werden. Unter einer Transaktion wird eine gegenseitige Übertragung von virtuellen oder realen Gütern bzw. einer Zahlung oder anderen Informationen von einem Sender zu einem Empfänger verstanden. Bei Bitcoin wird eine relativ einfache stackbasierte Laufzeitumgebung verwendet. Eine Transaktion umfasst dabei die Prüfsumme zur Überprüfung der Gültigkeit der Transaktion. Die Blockchain-Plattform Ethereum unterstützt eine frei programmierbare Laufzeitumgebung, sodass der Programmcode einer Blockchain flexibel realisiert werden kann. Dabei wird z. B. eine Geschäftslogik als Programmcode im Transaktionsdatensatz und damit in der Blockchain hinterlegt. So gesehen ist die auszuführende Transaktion in einem (Ketten-)Glied der Blockchain hinterlegt. Demnach ist in diesem Zusammenhang eine Unterscheidung zwischen der auszuführenden Transaktion und dem Transaktionsdatensatz, der zur Ausführung der Transaktion ausgestaltet ist, ist kaum möglich. Auch die Blockketten-Plattform Hyperledger unterstützt eine frei programmierbare Laufzeitumgebung zur Ausführung von Smart Contracts.

Erfindungsgemäß kann eine Blockchain-Plattform verwendet werden, um eine virtuelle Maschine, die als Zustandsautomat, Turingmaschine, Stack- bzw. Registermaschine ausgestaltet sein kann, manipulationsgeschützt zu realisieren. Es kann ein beliebiges, herkömmliches Programm durch eine Blockchain-basierte virtuelle Maschine kyptographisch geschützt bzw. manipulationsgeschützt ausgeführt werden. Eine virtuelle Maschine wird durch eine Blockchain realisiert. Dabei wird ein Zustand der virtuellen Maschine durch eine Transaktion der Blockchain erzeugt. Durch einen Smart Contract der Blockchain ist spezifiziert, was ein gültiger nachfolgender Zustand ist. Dieser wird ebenfalls als Transaktion in der Blockchain in einem nachfolgenden Block aufgenommen. Der Smart Contract der Blockchain realisiert dabei einen Interpreter für die virtuelle Maschine. Dieser gibt an, welche Zustandsübergänge (Transaktionen der virtuellen Maschine) zulässig sind. Dadurch können unterschiedliche virtuelle Maschinen in einer Blockchain-Plattform realisiert werden. So können z.B. auch als Hardware verfügbare Prozessoren (CPUs) wie z.B. 6502, Z80, ARM Cortex M0, TMS320 als virtuelle Maschine durch einen Smart Contract einer Blockchain-Plattform realisiert werden. Dadurch kann Programmcode, der für die Ausführung auf einer CPU vorgesehen ist, in einer Blockketten-basierten virtuellen Maschine manipulationsgeschützt ausgeführt werden. Ebenso können virtuelle Maschinen, wie z.B. eine Java Virtual Machine (JVM) oder eine Microsoft Common Language Runtime (CLR) virtuelle Maschine in einer Blockketten-basierten virtuellen Maschine manipulationsgeschützt ausgeführt werden. Dadurch kann Programmcode, der für die Ausführung auf einer bekannten virtuellen Maschine vorgesehen ist, in einer Blockketten-basierten virtuellen Maschine manipulationsgeschützt ausgeführt werden.

Durch die Logik der Blockchain bzw. der Blockkette wird somit sichergestellt, dass die virtuelle Maschine korrekt ausgeführt wird. Die Blockchain kann einfach durch eine Vielzahl unterschiedlicher Knoten (unterschiedliche Hardware, unterschiedliche Betriebssysteme) realisiert werden. Die Folge von Zustandsübergängen ist für Außenstehende transparent und damit überprüfbar, da die Folge von Blockchain-Transaktionen nachvollziehbar ist. Dadurch kann ein äußerst verlässliches Computersystem realisiert werden, ohne spezielle Rechnerarchitekturen oder ein Coded Processing verwenden zu müssen.

Außerdem ist die Integrität der Ausführung nicht nur gegenüber zufälligen Fehlern, sondern auch gegen gezielte Manipulation durch die Blockchain-basierte Ausführung geschützt. Weiterhin kann die Blockketten-Plattform auf unterschiedlichen Hardware-Plattformen ausgeführt werden, sodass ein Ausnutzen eines Hardware-Trojaners einer Hardware-Plattform verhindert oder zumindest erschwert wird.

Ein weiterer Aspekt der Erfindung ist ein Verfahren zum kryptographisch geschützten Betrieb einer virtuellen Maschine aufweisend folgende Schritte:
- Bereitstellen zumindest eines ersten Gliedes einer Blocckette, welches mindestens einen Transaktionsdatensatz umfasst, der zumindest einen ersten Betriebszustand der virtuellen Maschine beschreibt und zumindest eine Anweisung zur Bildung eines zweiten Glieds in der Blockkette aufweist, wobei der mindestens eine Transaktionsdatensatz des zweiten Glieds, einen gegenüber den ersten Betriebszustand geänderten zweiten Betriebszustand der virtuellen Maschine beschreibt,
- Bereitstellen einer Überprüfungsfunktion, welche eine durch den mindestens einen Transaktionsdatensatz definierte, auszuführende Transaktion dahingehend überprüft, ob der zweite Betriebszustand der virtuellen Maschine zulässig ist, und
- Ausführen der Transaktion mittels einer für eine Laufzeitumgebung der Blockkette geeigneten Vorrichtung insbesondere der oben genannten Art abhängig von der überprüften Zulässigkeit.

Das Verfahren ist wiederholbar. Mehrerer Glieder beginnend mit einem Startglied können gebildet bzw. erzeugt werden, wobei jedes Glied für sich eine Überprüfungsfunktion der oben genannten Art oder Teilfunktionen davon entsprechend enthalten kann. Das bedeutet, dass die Blockkette eine Folge von Transaktionen aufweist, die jeweils einen Betriebszustand der virtuellen Maschine aufweisen. Die virtuelle Maschine umfasst dabei eine Mehrzahl von Anweisungen. Abhängig von den Anweisungen der virtuellen Maschine wird ein Folge-Betriebszustand ermittelt bzw. überprüft. Dabei kann je Anweisung jeweils ein Glied mit einem Folge-Betriebszustand der virtuellen Maschine gebildet werden. Es können auch mehrere Anweisungen zusammengefasst werden, um ein Glied mit einem Folge-Betriebszustand der virtuellen Maschine zu bilden. Weiterhin ist es möglich, dass die virtuelle Maschine eine Terminierungs-Anweisung aufweist, welche die Ausführung der virtuellen Maschine beendet. Das Verfahren kann entsprechend der Weiterbildungen und Ausführungsformen der oben genannten Vorrichtung weitergebildet werden.

Das Verfahren wird vorzugsweise rechnergestützt durchgeführt.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, der Mittel oder anderer Aspekte und/oder Teilaspekte der Erfindung realisiert.

Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

Unter Mittel kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "Bereitstellen" kann im Zusammenhang mit der Erfindung beispielsweise ein Erstellen, Laden oder ein Speichern, des Transaktionsdatensatzes auf oder von einem Datenträger bzw. Plattform verstanden werden.

Eine Ausführungsform der Erfindung ist ein Block bzw. Glied einer Blockkette, welche ein oder mehrere Transaktionsdatensätze umfasst. Eine Blockkette ist aus mehreren Blöcken zusammengesetzt.

Unter "Glied" kann im Zusammenhang mit der Erfindung ein Block einer Blockkette verstanden werden, die insbesondere als Datenstruktur realisiert ist.

Unter "vorhergehender Glieder des ersten Gliedes der Blocckette" kann im Zusammenhang mit der Erfindung beispielsweise nur das Glied der Blockkette verstanden werden, das insbesondere dem ersten Glied direkt vorhergeht. Alternativ können unter "vorhergehender Glieder des ersten Gliedes der Blocckette" insbesondere auch alle Glieder der Blockkette verstanden werden, die dem ersten Glied vorhergehen.

Unter einem "Transaktionsdatensatz" können im Zusammenhang mit der Erfindung beispielsweise die Daten einer Transaktion einer Bockkette (engl. Blockchain) verstanden werden. Ein Transaktionsdatensatz kann beispielsweise einen Programmcode umfassen, der beispielsweise ein Smart Contract sein kann.

Des Weiteren wird Computerprogramm(-produkt) mit Programmbefehlen für die Vorrichtung der oben genannten Art, das mittels der Programmbefehle konfiguriert wird, die zum Betrieb einer virtuellen Maschine insbesondere nach dem oben genannten Verfahren geeignet sind und zumindest ein Glied einer Blockkette bilden, welches den Betriebszustand der virtuelle Maschine beschreibt, und zulässige Betriebszustandsänderungen der virtuellen Maschine ausführen.

Das Computerprogramm(-produkt) kann eine Laufzeitumgebung der oben genannten Art bilden.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei ...

Die Verwendungen, Vorrichtungen und Computerprogramm (produkte) können entsprechend der Weiterbildungen/Ausführungsformen des oben genannten Verfahrens und dessen Weiterbildungen/Ausführungsformen ausgebildet sein.

Darüber hinaus ist eine Bereitstellungsvorrichtung zum Speichern und/oder Bereitstellen des Computerprogrammprodukts möglich. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass diese erfindungsgemäße Vorrichtung und/oder das Glied und/oder die Blockkette erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
Fig. 1 ein Ausführungsbeispiel der Erfindung als Blockkette;
Fig. 2 ein Ausführungsbeispiel eines Transaktionsdatensatzes eines Gliedes einer Blockkette;
Fig. 3 Ausführungsbeispiele, wie eine virtuelle Maschine ausgestaltet sein kann.

In den Figuren sind funktionsgleiche Elemente mit denselben Bezugszeichen versehen, sofern nichts anderes angegeben ist.

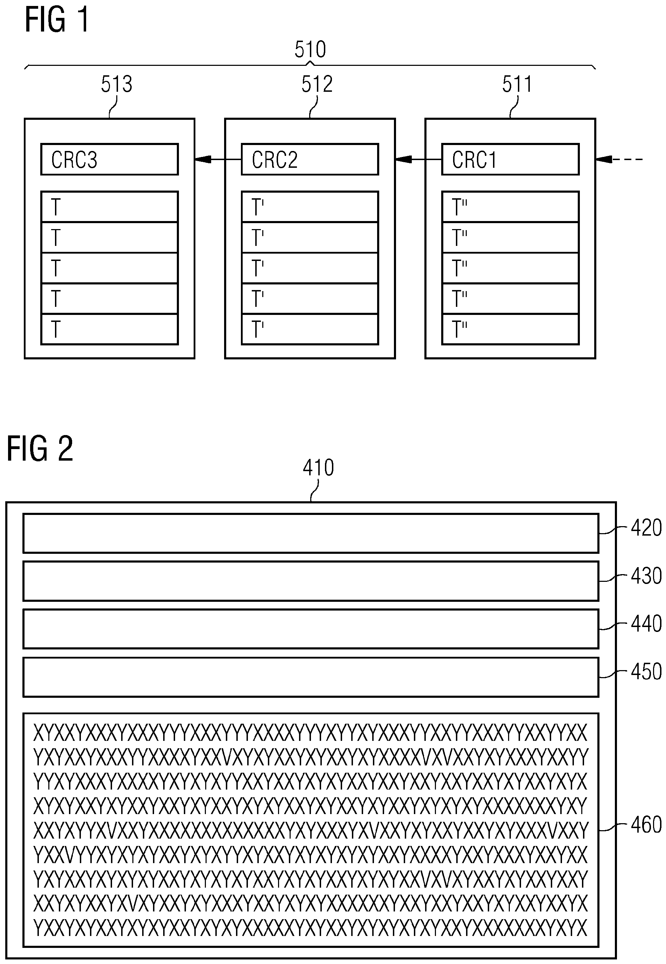

Im Einzelnen zeigt die Fig. 1 die Glieder, beispielsweise ein erstes Glied 511, ein zweites Glied 512 und ein drittes Glied 513, einer Blockkette 510.

Die Glieder umfassen jeweils mehrere Transaktionen T. Die Glieder umfassen jeweils zusätzlich noch einen kryptographischen Hashwert CRC1, CRC2, CRC3, der abhängig vom Vorgänger-Glied gebildet ist. Somit umfasst das erste Glied 511 einen ersten Hashwert CRC1 von seinem Vorgänger-Glied, das zweite Glied 512 einen Hashwert CRC2 vom ersten Glied 511, und das dritte Glied 513 einen Hashwert CRC3 vom zweiten Glied 512. Der Hash-Wert kann insbesondere ein kryptographischer Hash-Wert sein, der z.B. mittels SHA2-256, SHA2-384, SHA-3, BLAKE2 bestimmbar ist.

Die Fig. 2 zeigt ein Ausführungsbeispiel als Blockkette.

Mit Hilfe des Transaktionsdatensatzes 410 kann eine Transaktion T ausgeführt werden. Die Glieder können jeweils zu ihren Transaktionen T einen Hash(funktions)-Wert umfassen, der abhängig von den Transaktionsdatensätzen gebildet wird. Üblicherweise wird ein Hash-Baum, z. B. ein Merkle Tree oder Patricia Tree, verwendet, dessen Wurzel-Hash-Wert in einem Block bzw. Glied hinterlegt wird.

Ein Block kann weiterhin einen Zeitstempel, eine digitale Signatur, einen Proof-of-Work-Nachweis aufweisen. Unter "Proof-of-Work-Nachweis" kann in diesem Zusammenhang beispielsweise ein Lösen einer rechenintensiven Aufgabe verstanden werden, die insbesondere abhängig vom Glied-Inhalt/Inhalt eines Transaktionsdatensatzes zu lösen ist. Eine solche rechenintensive Aufgabe wird beispielsweise auch als kryptographisches Puzzle bezeichnet.

Dabei ist der Programmcode 460, z. B. ein Smart Contract. Der Transaktionsdatensatz 410 kann noch weitere Daten umfassen wie beispielsweise einen Betreff 420 (z. B. Siemens SiemensABC), einen öffentlichen Schlüssel 430 (z. B. 3A76E21876EFA03787FD629A65E9E990...), den verwendeten Algorithmus 440 des öffentlichen Schlüssels 430 (z. B. ECC) und eine Parameterangabe 450 zu dem Algorithmus (z. B. Curve: brainpoolP160r1) .

Der Transaktionsdatensatz 410 beinhaltet eine Hash-Wert (z.B. SHA256) für den Smart Contract 460. Damit kann der Smart Contract nicht mehr nachträglich unbemerkt verändert werden.

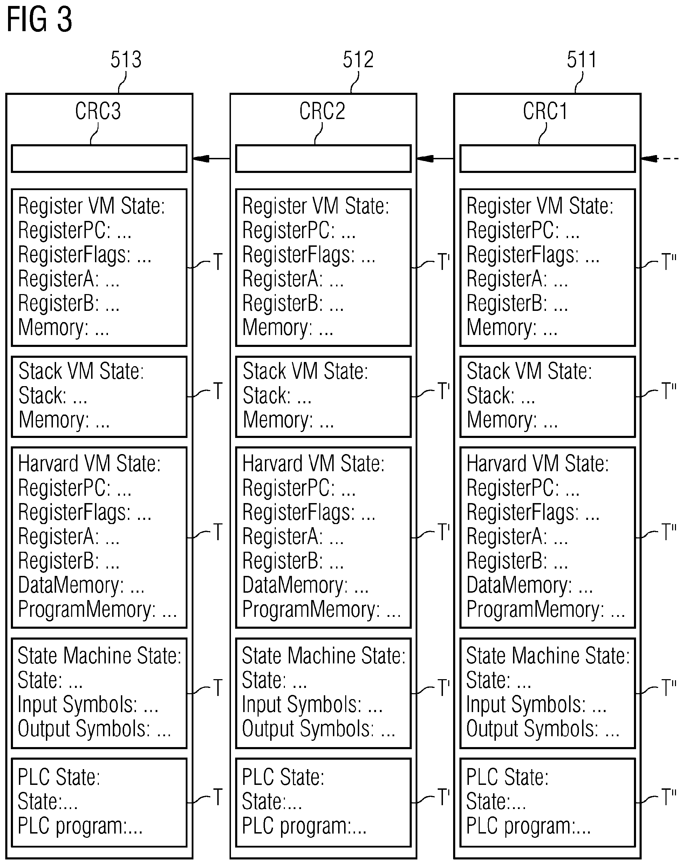

Fig. 3 zeigt Ausführungsformen von möglichen virtuellen Maschinen, die durch die Transaktion T, T' und T" zum Ausdruck kommen. Dabei gibt es für eine virtuelle Maschine verschiedene Register-, Speicher- und/oder Stackzustände, die in Fig. 3 beispielhaft mit RegisterFlags, RegisterA, RegisterB und/oder Memory, PLC-Programm etc. bezeichnet sind. T, T', T" drücken die verschiedenen Zustände aus, z.B. beginnend mit einem Startzustand in T, einem zweiten Zustand in T' und einem Endzustand in T". Die unterschiedlichen Zustände wird durch die Interpretation und/oder Ausführung eines oder mehrerer Transaktionsdatensätze der oben genannten Art 410 erreicht. Dabei werden Anweisungen (Programmcode) der virtuellen Maschine durch einen Smart Contract ausgeführt, wobei der Smart Contract wiederum auf der Blockketten-Laufzeitumgebung ausgeführt wird.

Für die Blockkette 510 gibt es eine in den Figuren nicht explizit dargestellte Blockketten-Laufzeitumgebung, in der mittels eines Rechners und mittels mehrerer Rechner (z.B. ein Rechner pro Glied 511, 512 bzw. 513) die Transaktionen T und der die virtuelle Maschine realisierende Smart Contract interpretiert bzw. ausgeführt werden. Die Integritätsüberprüfungsfunktion zur Überprüfung bzw. Interpretationsfunktion der durch einen Smart Contract realisierten virtuellen Maschine (virtual machine interpreter smart contract) zur Interpretation/Ausführung der Transaktion bezüglich dem aktuellen Zustand der virtuellen Maschine und der Anweisung bzw. den Anweisungen (Programmcode) der virtuellen Maschine ist in der Figur nicht explizit gezeigt. Sie kann in den Transaktionsdatensatz 410 integriert sein oder außerhalb desselben angeordnet sein. Für den integrierten Ansatz kann die genannte Integritätsüberprüfungsfunktion bzw. Interpretationsfunktion als Smart Contract 460 ausgebildet sein.

Auf diese Weise kann eine virtuelle Maschine, die in Form einer Registermaschine, Stackmaschine bzw. eines Zustandsautomaten realisiert sein kann, in einer Blockkette gebildet werden.

Dabei ist ein Zustand der virtuellen Maschine eine Transaktion z.B. T der Blockkette. Durch einen Smart Contract 460 der Blockkette ist spezifiziert, was ein zulässiger bzw. gültiger nachfolgende Zustand ist. Dieser wird ebenfalls als Transaktion z.B. T' in der Blockkette in einem nachfolgenden Glied aufgenommen.

Ein Glied der Blockkette bestätigt mehrere Transaktionen. Neben allgemeinen Transaktionen (nicht dargestellt) sind erfindungsgemäß Transaktionen enthalten, die den Zustand einer virtuellen Maschine enthalten:
Wie oben bereits angedeutet und in Figur 3 schematisch dargestellt sind folgende Ausprägungen der virtuellen Maschine und Ihrer (Betriebs-)Zustände möglich:
- Der Zustand einer Registermaschine ist durch den Inhalt der Register (Program Counter, Flags, A, B) und des Speichers (Memory) gegeben. Eine Nachfolgetransaktion der Blockkette ist gültig, wenn der durch den Program Counter im Speicher referenzierte Maschinenbefehl korrekt ausgeführt ist. Die Ausführung des Maschinenbefehls führt normalerweise zu geänderten Inhalten der Register und des Speichers.
- Ebenso kann eine Stack-basierte virtuelle Maschine ausgeführt werden (z.B. eine Forth-Maschine). Deren Zustand besteht aus einem Stack und einem Speicher.
- Eine weitere virtuelle Maschine realisiert eine Harvard-Architektur mit getrenntem Datenspeicher und Programmspeicher.
- Außerdem kann eine virtuelle Maschine auch ein endlicher Automat sein. Dieser besteht hierbei aus dem aktuellen Zustand und einer Folge von Eingabesymbolen (Input Symbols) und einer Folge von Ausgabesymbolen (Output Symbols) .
- Weiterhin kann eine virtuelle Maschine eine speicherprogrammierbare Steuerung (SPS), in English ausgedrückt Programmable Logic Controller (PLC) sein, die den physikalischen Systemzustand in Variablen hält. Es ist hierbei auch möglich, dass externe Informationen zu einem durch Sensoren ermittelten Wert als Blockketten-Transaktion verfügbar gemacht werden, und dass zumindest ein Aktorsignal zur Ansteuerung von physikalischen Aktoren ebenso als Blockketten-Transaktion verfügbar gemacht wird.

Durch die Logik der Blockkette wird somit sichergestellt, dass die virtuelle Maschine korrekt ausgeführt wird. Die Blockkette kann einfach durch eine Vielzahl unterschiedlicher Knoten (unterschiedliche Hardware, unterschiedliche Betriebssysteme) realisiert werden. Die Folge von Zustandsübergängen ist für Außenstehende transparent und damit überprüfbar, da die Folge von Blockketten-Transaktionen nachvollziehbar ist. Dadurch kann ein äußerst verlässliches Computersystem realisiert werden, ohne spezielle Rechnerarchitekturen oder ein Coded Processing verwenden zu müssen.

Außerdem ist die Integrität der Ausführung nicht nur gegenüber zufälligen Fehlern, sondern auch gegen gezielte Manipulation durch die Blockketten-basierte Ausführung geschützt. In einer Ausführungsform wird eine Blockketten-Transaktion für jeden einzelnen Maschinenbefehl der virtuellen Maschine gebildet. In einer weiteren Ausführungsform wird eine Mehrzahl von Maschinenbefehlen ausgeführt, und das Ergebnis der Mehrzahl von ausgeführten Maschinenbefehlen wird in der Blockkette als Blockketten-Transaktion festgehalten. Es kann z.B. nach einer festen Anzahl von Befehlen (z.B. 128) eine neue Blockketten-Transaktion erzeugt werden. Es sind jedoch auch andere Kriterien möglich, insbesondere auch Kriterien, die vom Programmfluss abhängen. So kann bei jedem Sprung oder bei jedem Aufruf eines Unterprogramms (Jump Subroutine (JSR)) oder bei einer Rückkehr aus einem Unterprogramm (Return (RET)) eine neue Blockketten-Transaktion erzeugt werden. Dies hat den Vorteil, dass die Ausführungsgeschwindigkeit der virtuellen Maschine nicht derart durch die Blockketten-Geschwindigkeit begrenz wird, dass je Glied der Blockkette (z.B. alle 20 Sekunden) nur ein einzelner Maschinenbefehl ausgeführt wird. Es ist jedoch auch möglich, höhere Programmiersprachen, insbesondere Skriptsprachen wie z.B. Python oder JavaScript oder eine Programmiersprache für eine speicherprogrammierbare Steuerung (SPS, PLC) wie insbesondere Ladder (LAD), Function Block Diagram (FBD) oder Instruction List (IL), durch eine in der Blockkette realisierte virtuelle Maschine auszuführen. Ebenso ist es möglich, auch als Hardware verfügbare Prozessoren (CPUs), wie z.B. 6502, Z80, ARM Cortex M0, TMS320, oder eine JVM oder eine CLR virtuelle Maschine durch eine in der Blockkette realisierte virtuelle Maschine auszuführen.

Eine Blockketten-Plattform kann eine Vielzahl von virtuellen Maschinen parallel, voneinander unabhängig ausführen. Die Blockketten-Plattform kann öffentlich oder zugangsbeschränkt sein. Insbesondere ist es möglich, ein auf Blockketten-Algorithmen basierenden sicheren Rechner zu realisieren (z.B. als Steuerungsrechner oder als Cloud-basierte Steuerungsfunktion) .

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Vorrichtung, insbesondere geeignet für eine Laufzeitumgebung für eine Blockkette (510), zum Betrieb einer kryptographisch geschützten virtuellen Maschine aufweisend:
- Mittel zum Bereitstellen zumindest eines ersten Gliedes (511) einer Blockkette, welches mindestens einen Transaktionsdatensatz (410) umfasst, der zumindest einen ersten Betriebszustand der virtuellen Maschine beschreibt und zumindest eine Anweisung zur Bildung eines zweiten Glieds (512, 513) in der Blockkette aufweist, wobei der mindestens eine Transaktionsdatensatz des zweiten Glieds, einen gegenüber den ersten Betriebszustand (T) geänderten zweiten Betriebszustand (T', T") der virtuellen Maschine beschreibt, wobei die virtuelle Maschine als Stack- oder Registermaschine ausgestaltet ist,
- Mittel zum Bereitstellen einer Überprüfungsfunktion, welche eine durch den mindestens einen Transaktionsdatensatz definierte, auszuführende Transaktion dahingehend überprüft, ob der zweite Betriebszustand der virtuellen Maschine zulässig ist, wobei die Überprüfungsfunktion Aufgaben eines Interpreters übernimmt, der Befehle zum Betrieb der virtuellen Maschine interpretiert und/oder ausführt, und
- Mittel zum Ausführen der Transaktion abhängig von der überprüften Zulässigkeit.

2. Vorrichtung nach dem vorhergehenden Anspruch, **dadurch gekennzeichnet, dass** die Überprüfungsfunktion im ersten Glied (511) in der Blockkette (510) integriert ist.

3. Vorrichtung nach einem der vorhergehenden Ansprüche, **dadurch gekennzeichnet, dass** die Überprüfungsfunktion durch einen sogenannten Smart Contract (460) repräsentiert ist.

4. Vorrichtung nach einem der vorhergehenden Ansprüche, **dadurch gekennzeichnet, dass** die Betriebszustandsänderung Maschinen-interne Zustände betrifft.

5. Vorrichtung nach einem der vorhergehenden Ansprüche, **dadurch gekennzeichnet, dass** die Betriebszustandsänderung Zustände von außerhalb der Maschine angeordneten Sensoren, Aktoren und/oder Steuerungseinrichtungen für Geräte oder Anlagen betrifft.

6. Verfahren zum kryptographisch geschützten Betrieb einer virtuellen Maschine aufweisend folgende Schritte:
- Bereitstellen zumindest eines ersten Gliedes (511) einer Blockkette (510), welches mindestens einen Transaktionsdatensatz (410) umfasst, der zumindest einen ersten Betriebszustand (T) der virtuellen Maschine beschreibt und zumindest eine Anweisung zur Bildung eines zweiten Glieds in der Blocckette aufweist, wobei der mindestens eine Transaktionsdatensatz des zweiten Glieds, einen gegenüber den ersten Betriebszustand geänderten zweiten Betriebszustand (T', T") der virtuellen Maschine beschreibt, wobei die virtuelle Maschine als Stack- oder Registermaschine ausgestaltet ist,
- Bereitstellen einer Überprüfungsfunktion, welche eine durch den mindestens einen Transaktionsdatensatz definierte, auszuführende Transaktion dahingehend überprüft, ob der zweite Betriebszustand der virtuellen Maschine zulässig ist, wobei die Überprüfungsfunktion Aufgaben eines Interpreters übernimmt, der Befehle zum Betrieb der virtuellen Maschine interpretiert und/oder ausführt, und
- Ausführen der Transaktion mittels einer für eine Laufzeitumgebung der Blockkette geeigneten Vorrichtung insbesondere nach einem der vorhergehenden Vorrichtungsansprüchen abhängig von der überprüften Zulässigkeit.

7. Verfahren nach dem vorhergehenden Anspruch, durch gekennzeichnet, dass die Überprüfungsfunktion integriert im ersten Glied (511) in der Blockkette (510) bereitgestellt wird.

8. Verfahren nach Anspruch 6 oder 7, **dadurch gekennzeichnet, dass** die Überprüfungsfunktion durch einen sogenannten Smart Contract (460) repräsentiert wird.

9. Verfahren nach einem der Ansprüche 6-8, **dadurch gekennzeichnet, dass** die Betriebszustandsänderung Maschinen-interne Zustände betrifft.

10. Verfahren nach einem der Ansprüche 6-9, **dadurch gekennzeichnet, dass** die Betriebszustandsänderung Zustände von außerhalb der Maschine angeordneten Sensoren, Aktoren und/oder Steuerungseinrichtungen für Geräte oder Anlagen betrifft.

11. Transaktionsdatensatz (410) für ein Glied (511, 512, 513) einer Blockkette (510), der zumindest einen ersten Betriebszustand einer virtuellen Maschine beschreibt, aufweisend:
- zumindest eine Anweisung zur Bildung zumindest eines weiten Glieds (512, 513) in der Blockkette, wobei der Transaktionsdatensatz des weiteren Glieds, einen gegenüber den ersten Betriebszustand (T) geänderten zweiten Betriebszustand (T', T") der virtuellen Maschine beschreibt, wobei die virtuelle Maschine als Stack- oder Registermaschine ausgestaltet ist, und
- eine Überprüfungsfunktion, welche eine durch den Transaktionsdatensatz definierte, auszuführende Transaktion dahingehend überprüft, ob der zweite Betriebszustand der virtuellen Maschine zulässig ist, wobei die Überprüfungsfunktion Aufgaben eines Interpreters übernimmt, der Befehle zum Betrieb der virtuellen Maschine interpretiert und/oder ausführt.

12. Vorrichtung nach Anspruch 1 aufweisend zumindest einen Transaktionsdatensatz (410) nach Anspruch 11.

13. Computerprogrammprodukt mit Programmbefehlen für die Vorrichtung nach einem der vorhergehenden Vorrichtungsansprüche, das mittels der Programmbefehle konfiguriert wird, die zum Betrieb einer virtuellen Maschine nach einem der vorhergehenden Verfahrensansprüche geeignet sind und zumindest ein Glied (511, 512, 513) einer Blockkette (513) bilden, welches den Betriebszustand der virtuelle Maschine beschreibt, und zulässige Betriebszustandsänderungen der virtuellen Maschine ausführen.

## Claims

1. Apparatus, in particular suitable for a runtime environment for a blockchain (510), for operating a cryptographically protected virtual machine, having:
- means for providing at least one first link (511) of a blockchain, which link comprises at least one transaction data record (410) that describes at least one first operating state of the virtual machine and has at least one instruction to form a second link (512, 513) in the blockchain, wherein the at least one transaction data record of the second link describes a second operating state (T', T") of the virtual machine, which second operating state has changed in comparison with the first operating state (T), wherein the virtual machine is designed as a stack or register machine,
- means for providing a checking function that checks a transaction to be performed that is defined by the at least one transaction data record for whether the second operating state of the virtual machine is admissible, wherein the checking function undertakes tasks of an interpreter that interprets and/or executes commands for operating the virtual machine, and
- means for performing the transaction on the basis of the checked admissibility.

2. Apparatus according to the preceding claim, **characterized in that** the checking function is integrated in the first link (511) in the blockchain (510).

3. Apparatus according to either of the preceding claims, **characterized in that** the checking function is represented by what is known as a smart contract (460).

4. Apparatus according to one of the preceding claims, **characterized in that** the change of operating state relates to machine-internal states.

5. Apparatus according to one of the preceding claims, **characterized in that** the change of operating state relates to states of sensors, actuators and/or control devices, for devices or installations, that are arranged outside the machine.

6. Method for the cryptographically protected operation of a virtual machine, having the following steps:
- providing at least one first link (511) of a blockchain (510), which link comprises at least one transaction data record (410) that describes at least one first operating state (T) of the virtual machine and has at least one instruction to form a second link in the blockchain, wherein the at least one transaction data record of the second link describes a second operating state (T', T") of the virtual machine, which second operating state has changed in comparison with the first operating state, wherein the virtual machine is designed as a stack or register machine,
- providing a checking function that checks a transaction to be performed that is defined by the at least one transaction data record for whether the second operating state of the virtual machine is admissible, wherein the checking function undertakes tasks of an interpreter that interprets and/or executes commands for operating the virtual machine, and
- performing the transaction by means of an apparatus suitable for a runtime environment of the blockchain, in particular according to one of the preceding apparatus claims, on the basis of the checked admissibility.

7. Method according to the preceding claim, **characterized in that** the checking function is provided in a manner integrated in the first link (511) in the blockchain (510).

8. Method according to Claim 6 or 7, **characterized in that** the checking function is represented by what is known as a smart contract (460).

9. Method according to one of Claims 6-8, **characterized in that** the change of operating state relates to machine-internal states.

10. Method according to one of Claims 6-9, **characterized in that** the change of operating state relates to states of sensors, actuators and/or control devices, for devices or installations, that are arranged outside the machine.

11. Transaction data record (410) for a link (511, 512, 513) of a blockchain (510), which transaction data record describes at least one first operating state of a virtual machine, having:
- at least one instruction to form at least one further link (512, 513) in the blockchain, wherein the transaction data record of the further link describes a second operating state (T', T") of the virtual machine, which second operating state has changed in comparison with the first operating state (T), wherein the virtual machine is designed as a stack or register machine, and
- a checking function that checks a transaction to be performed that is defined by the transaction data record for whether the second operating state of the virtual machine is admissible, wherein the checking function undertakes tasks of an interpreter that interprets and/or executes commands for operating the virtual machine.

12. Apparatus according to Claim 1 having at least one transaction data record (410) according to Claim 11.

13. Computer program product having program commands for the apparatus according to one of the preceding apparatus claims, which computer program product is configured by means of the program commands, which are suitable for operating a virtual machine according to one of the preceding method claims and form at least one link (511, 512, 513) of a blockchain (513), which link describes the operating state of the virtual machine, and make admissible changes of operating state of the virtual machine.

## Revendications

1. Dispositif, plus particulièrement adapté pour un environnement d'exécution pour une chaîne de blocs (510), pour le fonctionnement d'une machine virtuelle protégée par cryptographie, comportant :
- des moyens pour fournir au moins un premier élément (511) d'une chaîne de blocs, lequel comprend au moins un jeu de données de transaction (410) qui décrit au moins un premier état de fonctionnement de la machine virtuelle et comporte au moins une instruction pour former un deuxième élément (512, 513) dans la chaîne de blocs, l'au moins un jeu de données de transaction du deuxième élément décrivant un deuxième état de fonctionnement (T', T") de la machine virtuelle modifié par rapport au premier état de fonctionnement (T), la machine virtuelle étant conçue en tant que machine à piles ou à registres,
- des moyens pour fournir une fonction de vérification qui vérifie une transaction à exécuter définie par l'au moins un jeu de données de transaction quant à l'admissibilité du deuxième état de fonctionnement de la machine virtuelle, la fonction de vérification assurant des tâches d'un interpréteur qui interprète et/ou exécute des ordres pour le fonctionnement de la machine virtuelle, et
- des moyens pour exécuter la transaction en fonction de l'admissibilité vérifiée.

2. Dispositif selon la revendication précédente, **caractérisé en ce que** la fonction de vérification est intégrée dans le premier élément (511) dans la chaîne de blocs (510).

3. Dispositif selon l'une des revendications précédentes, **caractérisé en ce que** la fonction de vérification est représentée par ce qu'il est convenu d'appeler un Smart Contract (460).

4. Dispositif selon l'une des revendications précédentes, **caractérisé en ce que** la modification de l'état de fonctionnement concerne des états internes de la machine.

5. Dispositif selon l'une des revendications précédentes, **caractérisé en ce que** la modification de l'état de fonctionnement concerne des états de capteurs, d'actionneurs et/ou de dispositifs de commande pour des appareils ou installations, agencés en dehors de la machine.

6. Procédé pour le fonctionnement protégé par cryptographie d'une machine virtuelle, comportant les étapes suivantes :
- fourniture d'au moins un premier élément (511) d'une chaîne de blocs (510), lequel comprend au moins un jeu de données de transaction (410) qui décrit au moins un premier état de fonctionnement (T) de la machine virtuelle et comporte au moins une instruction pour former un deuxième élément dans la chaîne de blocs, l'au moins un jeu de données de transaction du deuxième élément décrivant un deuxième état de fonctionnement (T', T") de la machine virtuelle modifié par rapport au premier état de fonctionnement, la machine virtuelle étant conçue en tant que machine à piles ou à registres,
- fourniture d'une fonction de vérification qui vérifie une transaction à exécuter définie par l'au moins un jeu de données de transaction quant à l'admissibilité du deuxième état de fonctionnement de la machine virtuelle, la fonction de vérification assurant des tâches d'un interpréteur qui interprète et/ou exécute des ordres pour le fonctionnement de la machine virtuelle, et
- exécution de la transaction au moyen d'un dispositif adapté pour un environnement d'exécution de la chaîne de blocs, et plus particulièrement selon l'une des revendications précédentes relatives au dispositif, en fonction de l'admissibilité vérifiée.

7. Procédé selon la revendication précédente, **caractérisé en ce que** la fonction de vérification est fournie intégrée au premier élément (511) dans la chaîne de blocs (510).

8. Procédé selon la revendication 6 ou 7, **caractérisé en ce que** la fonction de vérification est représentée par ce qu'il est convenu d'appeler un Smart Contract (460).

9. Procédé selon l'une des revendications 6-8, **caractérisé en ce que** la modification de l'état de fonctionnement concerne des états internes de la machine.

10. Procédé selon l'une des revendications 6-9, **caractérisé en ce que** la modification de l'état de fonctionnement concerne des états de capteurs, d'actionneurs et/ou de dispositifs de commande pour des appareils ou installations, agencés en dehors de la machine.

11. Jeu de données de transaction (410) pour un élément (511, 512, 513) d'une chaîne de blocs (510), lequel jeu décrit au moins un premier état de fonctionnement d'une machine virtuelle, comportant :
au moins une instruction pour former au moins un autre élément (512, 513) dans la chaîne de blocs, le jeu de données de transaction de l'autre élément décrivant un deuxième état de fonctionnement (T', T") de la machine virtuelle modifié par rapport au premier état de fonctionnement (T), la machine virtuelle étant conçue en tant que machine à piles ou à registres, et
- une fonction de vérification qui vérifie une transaction à exécuter définie par le jeu de données de transaction quant à l'admissibilité du deuxième état de fonctionnement de la machine virtuelle, la fonction de vérification assurant des tâches d'un interpréteur qui interprète et/ou exécute des ordres pour le fonctionnement de la machine virtuelle.

12. Dispositif selon la revendication 1, comportant au moins un jeu de données de transaction (410) selon la revendication 11.

13. Produit de programme informatique avec des ordres de programme pour le dispositif selon l'une des revendications précédentes relatives au dispositif, lequel est configuré au moyen des ordres de programme qui sont adaptés pour le fonctionnement d'une machine virtuelle selon l'une des revendications précédentes relatives au procédé et qui forment au moins un élément (511, 512, 513) d'une chaîne de blocs (513), lequel décrit l'état de fonctionnement de la machine virtuelle, et qui exécutent des modifications admissibles de l'état de fonctionnement de la machine virtuelle.
